# EUROPEAN PATENT APPLICATION

(11) **EP 4 545 686 A1**
(43) Date of publication of application: **30.04.2025**
(21) Application number: 23831222.7
(22) Date of filing: 21.06.2023
(51) Int. Cl.: C25B 11/077, C02F 1/461, C25B 1/13, C25B 9/00, C25B 11/052, C25B 11/063

(54) **ELECTRODE FOR OZONE GENERATION**

(30) Priority: 27.06.2022 JP 2022102527
(71) Applicant: Ishifuku Metal Industry Co., Ltd., Chiyoda-ku, Tokyo 101-0047 (JP)
(72) Inventor: SHIMA, Tomosuke, Soka-shi, Saitama 340-0002 (JP); MATSUMOTO, Satoru, Soka-shi, Saitama 340-0002 (JP); ISHIGAME, Koki, Soka-shi, Saitama 340-0002 (JP); KAMEGAYA, Yoichi, Soka-shi, Saitama 340-0002 (JP)
(74) Representative: TBK
(86) International application number: PCT/JP2023/022897
(87) International publication number: WO 2024/004776

(57) **Abstract**

An object of the present invention is to provide an electrode for ozone generation having excellent ozone generation efficiency even in a neutral aqueous solution such as city water, and having excellent durability. The present invention is directed to an electrode for electrolysis specifically designed for ozone generation. The electrode for ozone generation of the present invention comprises an electrode substrate formed of titanium or a titanium alloy, and a catalyst layer formed on the electrode substrate, the catalyst layer consisting of 79.0 mol% or more and 90.0 mol% or less of tin oxide, 7.0 mol% or more and 17.0 mol% or less of antimony oxide, and 0.1 mol% or more than 0.1 mol% and 6.0 mol% or less of nickel oxide on a metal basis.

## Description

### Technical Field

The present invention relates to an electrode for ozone generation to be used in the production of ozone water.

### Background Art

A hypochlorous acid solution for sterilization using chlorine generated by the electrolysis of water has been utilized in many fields. However, some areas have problems in that city water contains no chlorine and a salt needs to be added before electrolysis. Accordingly, attention has been paid to ozone water in which ozone is used as a substance having a sterilization power stronger than that of hypochlorous acid. At present, as roughly divided, there are two methods of producing ozone water. One is a method involving generating ozone by discharge such as silent discharge, and then dissolving the ozone in water to obtain ozone water, and the other one is a method involving generating ozone through a reaction at an anode by the electrolysis of water, and dissolving the ozone in water serving as an electrolyte to obtain ozone water.

The former method has problems in that ozone in a gas phase is difficult to dissolve in water, and the adjustment of its concentration is difficult. Meanwhile, the latter method can directly produce ozone water by electrolysis, and the concentration can be easily adjusted based on electrolysis conditions.

Regarding a method of electrolyzing water, Non Patent Literature 1 discloses the use of a platinum wire electrode as an anode in an acidic aqueous solution of sulfuric acid to generate ozone by electrolysis.

### Citation List

### Non-Patent Literature

[NPL 1] Electrochemistry and Industrial Physical Chemistry, 54(10), pp. 890-895, 1986

### Summary of Invention

### Technical Problem

The method of Non Patent Literature 1 uses the acidic aqueous solution of sulfuric acid as an electrolyte. However, there is a strong demand for an electrode capable of stably producing ozone in a neutral aqueous solution, which is more easily handled than sulfuric acid, such as city water.

An object of the present invention is to provide an electrode for ozone generation having excellent ozone generation efficiency even in a neutral aqueous solution such as city water, and having excellent durability.

### Solution to Problem

The inventors of the present invention have found that by forming a catalyst layer on a substrate made of titanium or a titanium alloy, the catalyst layer consisting of 79.0 mol% or more and 90.0 mol% or less of tin oxide, 7.0 mol% or more and 17.0 mol% or less of antimony oxide, and 0.1 mol% or more than 0.1 mol% and 6.0 mol% or less of nickel oxide on a metal basis, it is possible to obtain an electrode having high ozone generation efficiency in city water and having excellent durability. Based on these findings, the inventors have completed the present invention.

That is, the above-mentioned object is achieved by an electrode for electrolysis specifically designed for ozone generation, the electrode comprising: an electrode substrate formed of titanium or a titanium alloy; and a catalyst layer formed on the electrode substrate, the catalyst layer consisting of 79.0 mol% or more and 90.0 mol% or less of tin oxide, 7.0 mol% or more and 17.0 mol% or less of antimony oxide, and 0.1 mol% or more than 0.1 mol% and 6.0 mol% or less of nickel oxide on a metal basis.

The above-mentioned electrode for ozone generation has a value of an electric double layer capacitance of from 2 (mC/cm²) to 40 (mC/cm²).

In addition, the above-mentioned object is achieved by a method of producing the electrode for ozone generation, the method comprising: preparing a first solution in which tin oxide particles and antimony oxide particles are dispersed in a lower alcohol; preparing a second solution in which a nickel compound is dissolved in a lower alcohol; mixing the first solution and the second solution to prepare a mixed solution; applying the mixed solution onto a titanium substrate and drying the mixed solution applied onto the titanium substrate; and then subjecting the titanium substrate to heat treatment in air at from 300°C to 700°C.

According to the present invention, the electrode for ozone generation having excellent ozone generation efficiency even in a neutral aqueous solution such as city water, and having excellent durability can be provided.

### Description of Embodiments

The present invention is directed to an electrode for ozone generation, comprising: an electrode substrate formed of titanium or a titanium alloy; and a catalyst layer formed on the electrode substrate, the catalyst layer consisting of 79.0 mol% or more and 90.0 mol% or less of tin oxide, 7.0 mol% or more and 17.0 mol% or less of antimony oxide, and 0.1 mol% or more than 0.1 mol% and 6.0 mol% or less of nickel oxide on a metal basis (in terms of metal content).

In addition, the present invention is directed to a method of producing the electrode for ozone generation of the present invention, the method comprising: preparing a first solution in which tin oxide particles and antimony oxide particles are dispersed in a lower alcohol; preparing a second solution in which a nickel compound is dissolved in a lower alcohol; mixing the first solution and the second solution to prepare a mixed solution; and applying the mixed solution onto a titanium substrate and drying the mixed solution applied onto the titanium substrate; and then subjecting the titanium substrate to heat treatment in air at from 300°C to 700°C.

In the foregoing, the mixed solution may be produced by mixing a solution in which tin oxide particles are dispersed in a lower alcohol, a solution in which antimony oxide particles are dispersed in a lower alcohol, and a solution in which a nickel compound is dissolved in a lower alcohol.

In addition, it is also appropriate to apply any of the prepared mixed solutions onto a titanium substrate that has been degreased and roughened with an acid, and to dry the applied solution, followed by subjecting the titanium substrate to heat treatment in the air at from 300°C to 700°C after the applied solution has been dried.

The electrode for ozone generation of the present invention and the method of producing the same are described below.

### <Electrode Substrate>

Examples of a material for the electrode substrate to be used in the present invention include titanium and a titanium-based alloy. As the titanium-based alloy, a corrosion-resistant and electrically conductive alloy mainly containing titanium is used. Examples thereof include Ti-based alloys generally used as electrode materials, including combinations such as Ti-Ta-Nb, Ti-Zr, and Ti-Al. These electrode materials may each be processed into a desired shape, such as a plate shape, a porous plate shape, a rod shape, or a net-like plate shape, and be used as the electrode substrate.

### <Electrode Substrate Pre-treatment>

The above-mentioned electrode substrate should preferably be pre-treated in advance, as is generally performed. A specific suitable example of such pre-treatment is described below. Initially, the surface of the above-mentioned electrode substrate formed of titanium or the titanium-based alloy (hereinafter sometimes referred to as "titanium substrate") is cleaned, for example, with an alcohol, acetone, or the like and/or degreased by electrolysis in an alkaline solution in accordance with an ordinary method. Subsequently, the cleaned and/or degreased titanium substrate is subjected to further treatment. The titanium substrate is subjected to hydrofluoric acid having a hydrogen fluoride concentration of from 1 wt% to 20 wt%, or a mixed acid of hydrofluoric acid with another acid, such as nitric acid or sulfuric acid. This treatment removes an oxidized film on the surface of the titanium substrate and roughens the surface of the titanium substrate at the titanium crystal grain boundaries. The acid treatment mentioned above may be performed at a temperature of room temperature to about 40°C for a time of from several minutes to ten and several minutes depending on the surface state of the titanium substrate. Additionally, blasting treatment may be employed to sufficiently roughen the surface.

### <Titanium Hydride Formation Treatment>

The surface of the titanium substrate that has been acid-treated as described above is brought into contact with concentrated sulfuric acid. This process finely roughens the interior surface of the titanium crystal grain boundaries into a protrusion shape and forms a thin layer of titanium hydride on the surface of the titanium substrate. It is suitable to use concentrated sulfuric acid having a concentration of generally from 40 wt% to 80 wt%, preferably from 50 wt% to 60 wt%. For the purpose of stabilizing the treatment, a small amount of sodium sulfate, any other sulfate, or the like may be added to the concentrated sulfuric acid, as required. The contact with the concentrated sulfuric acid may be generally performed by immersing the titanium substrate in a concentrated sulfuric acid bath. At this time, the bath temperature is generally preferably within the range of generally from about 100°C to about 150°C, more preferably from about 110°C to about 130°C, and it is sufficient that the immersion time is generally from about 0.5 minute to about 10 minutes, preferably from about 1 minute to about 3 minutes. Through the treatment with sulfuric acid, the interior surface of the titanium crystal grain boundaries can be finely roughened into a protrusion shape, and an extremely thin coating film of titanium hydride can be formed on the surface of the titanium substrate. The titanium substrate treated with sulfuric acid is taken from the sulfuric acid bath, and is preferably quenched in an inert gas atmosphere, such as nitrogen or argon, to reduce the surface temperature of the titanium substrate to about 60°C or less. Additionally, for cleaning purposes, the use of a large amount of cold water is preferred during the quenching.

The titanium substrate has a surface on which an extremely thin coating film layer of titanium hydride is formed as described above. This titanium substrate is subjected to an immersion treatment in dilute hydrofluoric acid or a dilute fluoride aqueous solution (for example, an aqueous solution of sodium fluoride, potassium fluoride, or the like). This treatment allows the coating film of titanium hydride to grow. Thus, the coating film is made uniform and stabilized. In this treatment, the concentration of hydrogen fluoride in the dilute hydrofluoric acid or the dilute fluoride aqueous solution may fall within the range of generally from 0.05 wt% to 3 wt%, preferably from 0.3 wt% to 1 wt%. The temperature during the immersion treatment in any of those solutions may fall within the range of generally from 10°C to 40°C, preferably from 20°C to 30°C. The treatment may be performed until a uniform coating film of titanium hydride having a thickness of generally from 0.5 µm to 10 µm, preferably from 1 µm to 3 µm, is formed on the surface of the titanium substrate. The titanium hydride (TiHy, where "y" represents a number of from 1.5 to 2) changes in color from gray-brown to dark-brown depending on the degree of hydrogenation, and hence the formation of the coating film of titanium hydride having a thickness within the above-mentioned ranges can be empirically controlled according to the brightness contrast observed from a change in color tone of the surface of the substrate with respect to a standard color source.

### <Formation of Catalyst Layer>

Next, a solution is prepared by dispersing tin oxide particles and antimony oxide particles in a lower alcohol. Another solution is prepared by dissolving a nickel compound in a lower alcohol. The two solutions are then mixed to prepare a mixed solution. The prepared mixed solution is applied onto the above-mentioned pre-treated titanium substrate, dried, and heat-treated (fired) to form a catalyst layer consisting of tin oxide, antimony oxide, and nickel oxide.

In the foregoing, it is also possible to use a mixed solution prepared by mixing a solution in which tin oxide particles are dispersed in a lower alcohol, a solution in which antimony oxide particles are dispersed in a lower alcohol, and a solution in which a nickel compound is dissolved in a lower alcohol.

As the solvents for the above-mentioned solutions, lower alcohols are suitable; for example, methanol, ethanol, propanol, butanol, isobutanol, or a mixture thereof is advantageously used. In addition, when fine tin oxide particles and fine antimony oxide particles are contained, a dispersant may be added. As the dispersant, acetylacetone, alkyl ether carboxylic acid, or the like may be used.

The total metal concentration of a tin compound, an antimony compound, and a nickel compound in the lower alcohol solution may fall within the range of generally from 20 g/L to 300 g/L, preferably from 40 g/L to 290 g/L. When the metal concentration is less than 20 g/L, catalyst-supporting efficiency is deteriorated. In addition, when the metal concentration is more than 300 g/L, catalyst segregation is liable to occur, which causes problems with, for example, nonuniformity of catalytic activity, adhesion strength, and supporting amount.

The substrate in which the above-mentioned solution has been applied to the titanium surface is dried at a temperature within the range of from about 20°C to about 150°C, as required, and then heat-treated in an oxygen-containing gas atmosphere, for example, in the air. The heat treatment may be performed, for example, by heating in an appropriate heating furnace, such as an electric furnace, a gas furnace, or an infrared furnace. In this heat treatment, the temperature is generally set within a range from 300°C or more, at which each metal compound is decomposed and each metal forms a stable oxide, to a temperature (700°C or less) at which the oxidation of the titanium substrate does not excessively thickly grow. The heating time may be approximately set to from about 3 minutes to about 30 minutes depending on the size of the substrate to be heat-treated. Through the heat treatment, a metal oxide consisting of tin oxide, antimony oxide, and nickel oxide can be formed and supported on the titanium surface.

Moreover, when a sufficient amount of the metal oxide consisting of tin oxide, antimony oxide, and nickel oxide cannot be formed and supported through one supporting operation, the above-mentioned steps of applying, drying, and heat-treating the solution may be repeated a desired number of times.

In the catalyst layer consisting of tin oxide, antimony oxide, and nickel oxide, the ratio of tin oxide is 79.0 mol% or more and 90.0 mol% or less, the ratio of antimony oxide is 7.0 mol% or more and 17.0 mol% or less, and the ratio of nickel oxide is 0.1 mol% or more than 0.1 mol% and 6.0 mol% or less as the ratio of each component on a metal basis. In addition, the total of the ratios of the components is 100%.

Herein, in another aspect, the above-mentioned ratio of tin oxide may be more than 79.0 mol% and less than 90.0 mol% on a metal basis. In still another aspect, the ratio of tin oxide may be 80.0 mol% or more and 89.7 mol% or less on a metal basis. In still another aspect, the ratio of tin oxide may be 81.0 mol% or more and 89.5 mol% or less on a metal basis. In yet still another aspect, the ratio of tin oxide may be 82.0 mol% or more and 89.0 mol% or less on a metal basis. When the ratio of tin oxide is less than 79.0 mol% or more than 90.0 mol%, the durability of the catalyst layer is insufficient.

In addition, in another aspect, the above-mentioned ratio of antimony oxide may be 7.6 mol% or more and 16.0 mol% or less on a metal basis. In still another aspect, the ratio of antimony oxide may be 8.0 mol% or more and 15.0 mol% or less on a metal basis. When the ratio of antimony oxide is less than 7.0 mol% or more than 17.0 mol%, the durability of the catalyst layer is insufficient.

Further, in another aspect, the above-mentioned ratio of nickel oxide may be 0.2 mol% or more and 5.5 mol% or less on a metal basis. In still another aspect, the ratio of nickel oxide may be 0.4 mol% or more and 2 mol% or less on a metal basis. When the ratio of nickel oxide is less than 0.1 mol% or more than 6.0 mol%, the durability of the catalyst layer is insufficient.

In the production method of the present invention, the catalyst layer is formed by using any of the following solutions, applying the solution onto a titanium substrate, drying the applied solution, and then subjecting the titanium substrate to heat treatment: the solution in which fine tin oxide particles and fine antimony oxide particles are dispersed; or both the solution in which fine tin oxide particles are dispersed in a lower alcohol and the solution in which fine antimony oxide particles are dispersed in a lower alcohol. The average particle diameter of the tin oxide particles and the antimony oxide particles used herein is from 10 nm to 300 nm, preferably from 40 nm to 150 nm.

The electrode for ozone generation of the present invention has a value of an electric double layer capacitance of from 2 (mC/cm²) to 40 (mC/cm²).

In the method of producing the electrode for ozone generation of the present invention, the following solutions are used. A solution in which tin oxide particles and antimony oxide particles are dispersed in a lower alcohol is prepared. (Alternatively, two separate solutions may be prepared: one solution in which tin oxide particles are dispersed in a lower alcohol, and another solution in which antimony oxide particles are dispersed in a lower alcohol.) Additionally, a second solution in which a nickel compound is dissolved in a lower alcohol is prepared. These solutions are then mixed to form a mixed solution. The mixed solution is applied onto the titanium substrate and dried. The titanium substrate, after the mixed solution has been applied and dried, is subsequently heat-treated in the air at from 300°C to 700°C. When the processes of applying, drying, and heat-treating are repeated to thicken the catalyst layer, the electric double layer capacitance increases accordingly. When the number of the processes of applying, drying, and heat-treating is adjusted to form about several layers to about 20 layers, the value of the electric double layer capacitance can be set to from 2 (mC/cm²) to 40 (mC/cm²).

In order to further enhance the stability of the catalyst layer, an additional post-treatment process performed in the air at from 500°C to 700°C for from 2 hours to 20 hours may be added. The treatment time may be from 4 hours to 18 hours. For example, the post-treatment may be performed in the air at 550°C for 16 hours.

The electrode for ozone generation of the present invention preferably has a value of an electric double layer capacitance of from 3 (mC/cm²) to 30 (mC/cm²).

The electrode produced by the method of the present invention has a feature of having a greatly large electric double layer capacitance.
(1) The electric double layer capacitance is positively correlated with the surface area of the electrode. Hence, it is conceived that an electrode having a larger electric double layer capacitance includes a catalyst layer having a larger surface area.
(2) When the electric double layer capacitance is large, that is, when the surface area of the catalyst layer is large, a catalyst utilization ratio is high. It is presumed that a high catalyst utilization ratio improves activity because many catalytic active sites participate in the reaction. Additionally, the high catalyst utilization ratio also improves durability because the load applied to each unit area is reduced.

### Examples

The present invention is described in more detail by way of Examples. However, the present invention is not limited to Examples.

### [Example 1]

An isobutanol solution in which tin dioxide particles and antimony pentoxide particles were dispersed (Sn concentration=197 g/kg, Sb concentration=32 g/kg) was prepared in an amount of 1 g. To this solution, 0.012 g of an ethanol solution of nickel(II) chloride hexahydrate (Ni concentration=46 g/kg) was added to form a mixture. The mixture was irradiated with ultrasonic waves having a frequency of 31 kHz for 10 minutes, to prepare a coating solution (catalyst formation solution). The average particle diameter of the tin dioxide particles and the antimony pentoxide particles in the isobutanol solution used herein was measured using a laser diffraction/scattering particle size distribution analyzer, and was found to be 146 nm.

Next, a titanium substrate, formed of a titanium plate (t 0.5 mm×100 mm×50 mm) corresponding to JIS (Japanese Industrial Standards) type 1, was immersed in acetone and cleaned using ultrasonic waves for 10 minutes to degrease it. The titanium substrate (titanium plate) was then treated in an 8 wt% hydrofluoric acid at 20°C for 1 minute, followed by treatment in a 60 wt% sulfuric acid aqueous solution at 120°C for 1 minute. Subsequently, the titanium substrate was treated in a 0.3 wt% hydrofluoric acid at 20°C for 45 seconds.

0.13 mL of the above-mentioned coating solution was applied onto the above-mentioned surface-treated titanium substrate, dried at room temperature for 5 minutes, and then treated in the air at 550°C for 5 minutes. This series of steps is collectively referred to as the "application and heat treatment process."

The above-mentioned application and heat treatment process was repeated 6 times. As a result, an electrode of Example 1 was produced, in which a metal oxide consisting of 86.0 mol% of tin oxide, 13.5 mol% of antimony oxide, and 0.5 mol% of nickel oxide on a metal basis was supported on the titanium substrate.

### [Example 2]

An electrode of Example 2 was produced in the same manner as in Example 1 except that the addition amount of the solution of nickel(II) chloride hexahydrate in ethanol (Ni concentration=46 g/kg) was changed to 0.023 g. In the electrode of Example 2, a metal oxide consisting of 85.6 mol% of tin oxide, 13.5 mol% of antimony oxide, and 0.9 mol% of nickel oxide on a metal basis was supported on the titanium substrate.

### [Example 3]

An electrode of Example 3 was produced in the same manner as in Example 1 except that the addition amount of the solution of nickel(II) chloride hexahydrate in ethanol (Ni concentration=46 g/kg) was changed to 0.047 g. In the electrode of Example 3, a metal oxide consisting of 84.7 mol% of tin oxide, 13.4 mol% of antimony oxide, and 1.9 mol% of nickel oxide on a metal basis was supported on the titanium substrate.

### [Example 4]

An electrode of Example 4 was produced in the same manner as in Example 1 except that the addition amount of the solution of nickel(II) chloride hexahydrate in ethanol (Ni concentration=46 g/kg) was changed to 0.071 g. In the electrode of Example 4, a metal oxide consisting of 83.9 mol% of tin oxide, 13.3 mol% of antimony oxide, and 2.8 mol% of nickel oxide on a metal basis was supported on the titanium substrate.

### [Example 5]

An electrode of Example 5 was produced in the same manner as in Example 1 except that the addition amount of the solution of nickel(II) chloride hexahydrate in ethanol (Ni concentration=46 g/kg) was changed to 0.096 g. In the electrode of Example 5, a metal oxide consisting of 83.0 mol% of tin oxide, 13.2 mol% of antimony oxide, and 3.8 mol% of nickel oxide on a metal basis was supported on the titanium substrate.

### [Example 6]

An isobutanol solution in which tin dioxide particles and antimony pentoxide particles were dispersed (Sn concentration=256 g/kg, Sb concentration=27 g/kg) was prepared in an amount of 1 g. To this solution, 0.062 g of an ethanol solution of nickel(II) chloride hexahydrate (Ni concentration=46 g/kg) was added to form a mixture. The mixture was irradiated with ultrasonic waves having a frequency of 31 kHz for 10 minutes, to prepare a coating solution (catalyst formation solution). The average particle diameter of the tin dioxide particles and the antimony pentoxide particles in the isobutanol solution used herein was measured using a laser diffraction/scattering particle size distribution analyzer, and was found to be 146 nm.

Next, a titanium substrate, formed of a titanium plate (t 0.5 mm×100 mm×50 mm) corresponding to JIS type 1, was immersed in acetone and cleaned using ultrasonic waves for 10 minutes to degrease it. The titanium substrate (titanium plate) was then treated in an 8 wt% hydrofluoric acid at 20°C for 1 minute, followed by treatment in a 60 wt% sulfuric acid aqueous solution at 120°C for 1 minute. Subsequently, the titanium substrate was treated in a 0.3 wt% hydrofluoric acid at 20°C for 45 seconds.

0.13 mL of the above-mentioned coating solution was applied onto the above-mentioned surface-treated titanium substrate, dried at room temperature for 5 minutes, and then treated in the air at 550°C for 5 minutes. This series of steps is collectively referred to as the "application and heat treatment process."

The above-mentioned application and heat treatment process was repeated 6 times. Finally, treatment in the air at 550°C for 16 hours was performed as a post-treatment process. As a result, an electrode of Example 6 was produced, in which a metal oxide consisting of 88.9 mol% of tin oxide, 9.1 mol% of antimony oxide, and 2.0 mol% of nickel oxide on a metal basis was supported on the titanium substrate.

### [Example 7]

An electrode of Example 7 was produced in the same manner as in Example 6 except that the addition amount of the solution of nickel(II) chloride hexahydrate in ethanol (Ni concentration=46 g/kg) was changed to 0.159 g. In the electrode of Example 7, a metal oxide consisting of 86.2 mol% of tin oxide, 8.8 mol% of antimony oxide, and 5.0 mol% of nickel oxide on a metal basis was supported on the titanium substrate.

### [Example 8]

An electrode of Example 8 was produced in the same manner as in Example 6 except that the number of times of the application and heat treatment process was changed to 21. In the electrode of Example 8, a metal oxide consisting of 88.9 mol% of tin oxide, 9.1 mol% of antimony oxide, and 2.0 mol% of nickel oxide on a metal basis was supported on the titanium substrate.

### [Example 9]

An electrode of Example 9 was produced in the same manner as in Example 6 except that the temperature of the post-treatment process was changed to 650°C. In the electrode of Example 9, a metal oxide consisting of 88.9 mol% of tin oxide, 9.1 mol% of antimony oxide, and 2.0 mol% of nickel oxide on a metal basis was supported on the titanium substrate.

### [Comparative Example 1]

A titanium substrate, formed of a titanium plate (t 0.5 mm × 100 mm × 100 mm) of JIS type 1, was immersed in acetone and cleaned using ultrasonic waves for 10 minutes to degrease it. The titanium substrate (titanium plate) was then treated in an 8 wt% hydrofluoric acid at 20°C for 2 minutes, followed by treatment in a 60 wt% sulfuric acid aqueous solution at 120°C for 3 minutes. Next, the titanium substrate was taken from the sulfuric acid aqueous solution and then sprayed with cold water in a nitrogen atmosphere to quench it. Further, the titanium substrate was immersed in a 0.3 wt% hydrofluoric acid aqueous solution at 20°C for 2 minutes, and then cleaned with water. After cleaning the titanium substrate with water, the titanium substrate was subjected to electroplating in a platinum plating bath. The platinum plating bath was prepared by dissolving dinitrodiammine platinum in a sulfuric acid solution, and adjusted to the conditions of a platinum content of 5 g/L, a pH of approximately 2, and 50°C. As a result of the electroplating treatment in the platinum plating bath, an electrode of Comparative Example 1 was produced, in which platinum was supported at 6.5 mg/cm².

### [Comparative Example 2]

14.770 g of tin(IV) chloride pentahydrate, 0.620 g of antimony(III) oxide, and 0.107 g of nickel(II) chloride hexahydrate were added to 34.5 g of ethanol, and then stirred to prepare a coating solution.

Next, a titanium substrate, formed of a titanium plate (t 0.5 mm×100 mm×100 mm) corresponding to JIS type 1, was immersed in acetone and cleaned using ultrasonic waves for 10 minutes to degrease it. The titanium substrate (titanium plate) was then treated in an 8 wt% hydrofluoric acid at 20°C for 1 minute, followed by treatment in a 60 wt% sulfuric acid aqueous solution at 120°C for 1 minute. Subsequently, the titanium substrate was treated in a 0.3 wt% hydrofluoric acid at 20°C for 45 seconds.

0.24 mL of the above-mentioned coating solution was applied onto the above-mentioned surface-treated titanium substrate, dried at room temperature for 10 minutes, and then treated in the air at 550°C for 10 minutes.

The above-mentioned process was repeated 14 times. As a result, an electrode of Comparative Example 2 was produced, in which a metal oxide consisting of 93.0 mol% of tin oxide, 6.0 mol% of antimony oxide, and 1.0 mol% of nickel oxide on a metal basis was supported on the titanium substrate.

### [Comparative Example 3]

An isobutanol solution in which tin dioxide particles and antimony pentoxide particles were dispersed (Sn concentration=256 g/kg, Sb concentration=27 g/kg) was prepared in an amount of 1 g. To this solution, 0.009 g of an ethanol solution of nickel(II) chloride hexahydrate (Ni concentration=46 g/kg) was added to form a mixture. The mixture was irradiated with ultrasonic waves having a frequency of 31 kHz for 10 minutes, to prepare a coating solution (catalyst formation solution). The average particle diameter of the tin dioxide particles and the antimony pentoxide particles in the isobutanol solution used herein was measured using a laser diffraction/scattering particle size distribution analyzer, and was found to be 146 nm.

Next, a titanium substrate, formed of a titanium plate (t 0.5 mm×100 mm×50 mm) corresponding to JIS type 1, was immersed in acetone and cleaned using ultrasonic waves for 10 minutes to degrease it. The titanium substrate (titanium plate) was then treated in an 8 wt% hydrofluoric acid at 20°C for 1 minute, followed by treatment in a 60 wt% sulfuric acid aqueous solution at 120°C for 1 minute. Subsequently, the titanium substrate was treated in a 0.3 wt% hydrofluoric acid at 20°C for 45 seconds.

0.13 mL of the above-mentioned coating solution was applied onto the above-mentioned surface-treated titanium substrate, dried at room temperature for 5 minutes, and then treated in the air at 550°C for 5 minutes. This series of steps is collectively referred to as the "application and heat treatment process."

The above-mentioned application and heat treatment process was repeated 6 times, and no post-treatment process was performed. As a result, an electrode of Comparative Example 3 was produced, in which a metal oxide consisting of 90.5 mol% of tin oxide, 9.2 mol% of antimony oxide, and 0.3 mol% of nickel oxide on a metal basis was supported on the titanium substrate.

### <Ozone Generation Efficiency>

Electrolysis was performed using the electrode of each of Examples 1 to 5 and Comparative Examples 1 and 2 as an anode under the following conditions to measure ozone generation efficiency. For an electrolyte, 150 mL of an aqueous solution containing 0.25 mmol of MgSO₄, 0.25 mmol of NaHCO₃, 0.25 mmol of CaCl₂, and 0.025 mmol of KHCO₃ in 1 L of the aqueous solution was used. Moreover, the electrolysis was performed for 120 seconds under constant-current control at a current density of 2 A/dm². After that, the production amount of ozone was measured using the Indigo method, and the ozone generation efficiency was calculated.

### <Durability Test>

A durability test was performed using the electrode of each of Examples 1 to 5 and Comparative Examples 1 and 2 as an anode under the following conditions, and the ozone generation efficiency in each of Examples 1 to 5 and Comparative Examples 1 and 2 was measured before and during the durability test. The results are shown in Table 1.

For an electrolyte, 150 mL of an aqueous solution containing 0.25 mmol of MgSO₄, 0.25 mmol of NaHCO₃, 0.25 mmol of CaCl₂, and 0.025 mmol of KHCO₃ in 1 L of the aqueous solution was used. Moreover, electrolysis was performed under constant-current control at a current density of 2 A/dm².

### <Method of Measuring Electric Double Layer Capacitance>

Cyclic voltammetry (CV) measurement was performed using a three-electrode-type electrolysis cell, and the electric double layer capacitance was measured from the resultant cyclic voltammogram. Specifically, CV measurement was performed using the electrode (20 mm×25 mm) of each of Examples and Comparative Examples as a working electrode, a silver/silver chloride electrode as a reference electrode, and a Pt plate as a counter electrode. The CV measurement was conducted in 0.5 M sulfuric acid, within an electric potential range of from 0.8 V to 1.3 V (vs. Ag/AgCl), at a scanning speed of 50 mV/s. The total quantity of electricity during charge and discharge of the resultant electric double layer was calculated, and half of this value was divided by an electrode area of 5 cm² to obtain the electric double layer capacitance of the electrode. The obtained electric double layer capacitance (mC/cm²) is shown in Table 1.

**Table 1**

| Electrode | Composition of catalyst layer mol% on a metal basis | | | | Electric double layer capacitance (mC/ cm² ) | Ozone generation efficiency (%) before and after durability test (%) | | |
|---|---|---|---|---|---|---|---|---|
| | Sn | Sb | Ni | Pt | | Before test | After 25 hours | After 100 hours |
| Example 1 | 86.0 | 13.5 | 0.5 | - | 7.1 | 3.2 | 4.9 | 4.3 |
| Example 2 | 85.6 | 13.5 | 0.9 | - | 5.7 | 1.9 | 4.1 | 4.5 |
| Example 3 | 84.7 | 13.4 | 1.9 | - | 5.7 | 1.3 | 2.6 | 4.9 |
| Example 4 | 83.9 | 13.3 | 2.8 | - | 5.8 | 0.9 | 2.1 | 3.6 |
| Example 5 | 83.0 | 13.2 | 3.8 | - | 4.1 | 0.9 | 1.7 | 6.0 |
| Example 6 | 88.9 | 9.1 | 2.0 | - | 5.4 | 6.2 | 7.9 | 7.7 |
| Example 7 | 86.2 | 8.8 | 5.0 | - | 4.1 | 1.1 | 3.0 | 5.3 |
| Example 8 | 88.9 | 9.1 | 2.0 | - | 23.3 | 1.5 | 4.1 | 8.1 |
| Example 9 | 88.9 | 9.1 | 2.0 | - | 4.7 | 2.6 | 4.3 | 7.2 |
| Comparative Example 1 | - | - | - | 100 | - | 0.0 | - | - |
| Comparative Example 2 | 93.0 | 6.0 | 1.0 | - | 0.1 | 1.3 | 0.0 | - |
| Comparative Example 3 | 90.5 | 9.2 | 0.3 | - | 5.7 | 1.5 | 2.6 | 0.0 |

## Claims

1. An electrode for ozone generation, comprising:
an electrode substrate formed of titanium or a titanium alloy; and
a catalyst layer formed on the electrode substrate, the catalyst layer consisting of 79.0 mol% or more and 90.0 mol% or less of tin oxide, 7.0 mol% or more and 17.0 mol% or less of antimony oxide, and 0.1 mol% or more than 0.1 mol% and 6.0 mol% or less of nickel oxide on a metal basis.

2. The electrode for ozone generation according to claim 1, wherein the electrode for ozone generation has a value of an electric double layer capacitance of from 2 (mC/cm²) to 40 (mC/cm²).

3. A method of producing the electrode for ozone generation of claim 1 or 2, the method comprising:
preparing a first solution in which tin oxide particles and antimony oxide particles are dispersed in a lower alcohol;
preparing a second solution in which a nickel compound is dissolved in a lower alcohol;
mixing the first solution and the second solution to prepare a mixed solution;
applying the mixed solution onto a titanium substrate and drying the mixed solution applied onto the titanium substrate; and
then subjecting the titanium substrate to heat treatment in air at from 300°C to 700°C.
